# EUROPÄISCHE PATENTANMELDUNG

(11) **EP 2 078 656 A1**
(43) Veröffentlichungstag der Anmeldung: **15.07.2009**
(21) Anmeldenummer: 08172456.9
(22) Anmeldetag: 19.12.2008
(51) Int. Cl.: B61D 19/02, B61D 23/02, B08B 5/02, B60S 1/54, E05F 15/00

(54) **Sensierungsvorrichtung für Fahrzeugtürsysteme, insbesondere für Schienenfahrzeuge**

(30) Priorität: 21.12.2007 DE 202007018083 U; 19.04.2008 DE 202008005490 U
(71) Anmelder: Gebr. Bode GmbH & Co. KG, 34123 Kassel (DE)
(72) Erfinder: Schunke, Andreas, Dr. Ing., 37181 Hardegsen (DE)
(74) Vertreter: Bauer Vorberg Kayser Patentanwälte

(57) **Zusammenfassung**

Die Erfindung betrifft eine Sensierungsvorrichtung für Fahrzeugtürsysteme mit mindestens einem Näherungssensor (3). Es ist eine Vorrichtung vorgesehen, über die ein Fluidstrom vor den Näherungssensor (3), also durch dessen Sichtbereich geleitet wird, um den Näherungssensor von störenden Partikeln frei zu halten.

## Beschreibung

Die vorliegende Erfindung bezieht sich im Allgemeinen auf eine Sensierungsvorrichtung für Fahrzeugtürsysteme.

Der Begriff Fahrzeugtürsystem umfasst Systeme für Bus- und Schienenfahrzeuge, beispielsweise Türen und beweglich gelagerte bzw. ein- und ausfahrbare Trittplatten. Der Begriff ein- und ausfahrbare Trittplatte bezieht sich nicht auf eine rein lineare Bewegung, sondern umfasst auch andere oder ähnliche Bewegungen, bis hin zu einem Ausklappen der Trittplatte. Trittplatten werden weitestgehend für den Einsatz in Fahrzeugen genutzt, denkbar wäre aber auch eine anderweitige Nutzung wie in Be- und Entladebereichen. So sind aus dem Stand der Technik verschwenkbar gelagerte Trittplatten bekannt, die in Form von Rampen, linearen Tritten oder ähnlichem ausgefahren oder ausgeklappt werden können und dadurch den Ein- und Ausstieg erleichtern. Des Weiteren ist bekannt, dass im heutigen Lieferverkehr die Lieferfahrzeuge schnell und sicher Be- und Entladen werden müssen, wobei in der Regel kleinere Fahrzeuge über eine Rampe und größere Lieferfahrzeuge über eine Rampe oder eine hydraulisch bewegbare Heckklappen Be- und Entladen werden.

Um Sicherheitsauflagen zu erfüllen und einen störungsfreien Betrieb zu gewährleisten, müssen eventuell auftretende Hindernisse oder Störkräfte, wie beispielsweise Bordsteinkanten, Bahnsteige, Personen usw. beim Ein- und Ausfahren oder Ein- und Ausklappen der Trittplatte rechtzeitig erfasst werden. Bekanntermaßen werden für diesen Zweck oftmals Kontakt-Überwachungssensoren verwendet, die bewirken, dass das Fahrzeugtürsystem, z.B. die Trittplatte zurückfährt oder stoppt, wenn sie mit einem Hindernis in Kontakt kommt. Auch gibt es Überlegungen, Näherungssensoren, z.B. optisch oder akustisch zu verwenden, die in Ausfahrrichtung überwachen. Problematisch hierbei ist, dass die Bereiche, in denen sie sinnvollerweise montiert werden können, sehr anfällig für äußere, unvermeidbare Einflüsse, wie beispielsweise Schmutz, Feuchtigkeit, Spritzwasser und/oder Frost sind, wodurch die Funktion der Näherungssensoren gestört und die Bedienung der Trittplatte beeinträchtig wird. Insbesondere führen Schnee und Eis zum Einfrieren und zum Ausfall der Sensoren.

Die Aufgabe der vorliegenden Erfindung besteht darin, eine Sensierungsvorrichtung bereitzustellen, welche die vorgenannten Nachteile überwindet. Die Störanfälligkeit durch äußere, unvermeidbare Einflüsse soll einfach, schnell, kostengünstig und effektiv reduziert werden.

Erfindungsgemäß wird die Aufgabe durch eine Sensierungsvorrichtung für Fahrzeugtürsysteme mit mindestens einem Näherungssensor gelöst, wobei eine Vorrichtung vorgesehen ist, über die ein Fluidstrom vor den Näherungssensor geleitet wird.

Als Fluid wird vorzugsweise ein Luftstrom verwendet, denkbar sind aber auch Flüssigkeiten oder andere Gase.

Auf diese Weise überwindet die vorliegende Erfindung die oben genannten Nachteile, so dass mittels der Vorrichtung beispielsweise einer Düse der Näherungssensor von den störenden Partikeln, weitgehend frei gehalten wird, wodurch die Funktion des Sensors erhalten und die das Fahrzeugsystem zu jederzeit und überall unproblematisch und sicher bedient werden kann.

In einer besonders vorteilhaften Variante ist die Düse unmittelbar benachbart zum Näherungssensor angebracht, so dass die Strecke die der von der Düse aufzubringende Fluidstrom zurücklegen muss, möglichst gering ist. Auf diese Weise ist die damit einhergehende Ausrichtung der Düse einfach und unkompliziert, und zum anderen wird die Möglichkeit einer eventuellen Ablenkung des Strahls entsprechend klein gehalten.

Zur Vermeidung von Frostschäden oder -beeinträchtigungen kann der Fluidstrom erfindungsgemäß erwärmt sein, was zu einer ausreichenden Erwärmung des Näherungssensors führt. Dies ist insbesondere bei Ultraschallsensoren sinnvoll, da diese durch Vereisung, Schnee und Eis unbrauchbar werden.

Erfindungsgemäß kann eine Vorrichtung bzw. Düse je Näherungssensor vorgesehen sein. Möglich sind aber auch zwei oder mehr Düsen je Näherungssensor, oder umgekehrt, zwei oder mehr Näherungssensoren je Düse. Ist der Fluidstrom stark genug, kann er problemlos vor zwei oder mehreren Näherungssensoren hergeleitet werden.

Vorzugsweise kann der Fluidstrom auch unmittelbar auf den Näherungssensor gerichtet sein. Auf diese Weise können, Störfaktoren wie Staub und Schmutz durch den Fluidstrom von der Sensoroberfläche entfernt werden.

Als Näherungssensoren kommen sämtliche geeignete Sensoren in Frage, beispielsweise Ultraschallsensoren

Die grundsätzliche Idee der Erfindung besteht also darin, einen Fluidstrom bzw. einen Luftstrom dazu zu nutzen, dass Staubpartikel oder Schmutz bis vom Nährungssensor ferngehalten werden. Die vor dem Nährungssensor vorbeiströmende Luft lenkt entsprechende Partikel ab und leitet diese am Nährungssensor vorbei.

Vorzugsweise ist der Näherungssensor hinter einer Öffnung einer Wandung angeordnet. Dies ist besonders bei empfindlichen Näherungssensoren vorteilhaft, weil auf diese Weise ein großer Anteil der negativen äußeren Einflüsse bereits durch die Wandung vom Näherungssensor fern gehalten werden kann. Die Lebensdauer des Näherungssensors wird dadurch verlängert und die Effektivität des Fluidstroms zusätzlich weiter erhöht wird. Der Näherungssensor sensiert also durch die Öffnung hindurch, während der Fluidstrom zwischen Näherungssensor und Öffnung bewirkt, dass z.B. Schmutzpartikel nicht durch die Öffnung in Richtung des Näherungssensors gelangen können. Der Fluidstrom wirkt sozusagen wie ein Vorhang zwischen der Öffnung und dem Näherungssensor.

In einer besonders vorteilhaften Ausführungsvariante ist der Näherungssensor in einer Kammer angeordnet, in der ein Überdruck erzeugt wird. Vor dem Näherungssensor ist eine Öffnung vorgesehen, durch die der Näherungssensor hindurch sensiert. Durch den Überdruck wird ein Fluidstrom erzeugt, der vor dem Näherungssensor durch die Öffnung hindurch nach außen strömt, wodurch erreicht wird, dass keine Schmutzpartikel durch die Öffnung gelangen können. Auch ist es möglich ein Abtauen von Schnee und Eis durch einen erwärmten Fluidstrom zu bewirken oder zu verhindern. Die Kammer bzw. das Gehäuse kann nur einen Näherungssensor kapseln oder sich zum Beispiel über die gesamte Breite eines ausfahrbaren Tritts erstrecken und mehrere Näherungssensoren umgeben. Auch kann eine Trittplatte selbst als Hohlkörper und somit als Gehäuse bzw. Kammer für die Näherungssensoren ausgeführt sein. Zur Erzeugung des Überdrucks kann ein einfacher, handelsüblicher Lüfter verwendet werden.

Erfindungsgemäß kann weiterhin vorgesehen sein, dass im Normalbetrieb lediglich ein Luftstrom zum Ablenken von Schmutzpartikeln erzeugt wird, in regelmäßigen Abständen dieser aber verstärkt und zu Reinigungszwecken genutzt wird. Die Reinigungswirkung kann beispielsweise dadurch erhöht werden, dass die Düsen zu diesem Zweck beispielsweise motorisch bewegt werden, so dass der Fluidstrom, der ansonsten vor dem Nährungssensor hergeleitet wird, nun unmittelbar auf diesen trifft. Denkbar ist auch die Verwendung zweier Düsen, wobei eine Düse der Verschmutzungsprävention durch den Aufbau eines Luftstromvorhangs dient, während die andere Düse auf den Nährungssensor gerichtet ist und diesen reinigt.

Der Luftstrom kann durch jede geeignete Vorrichtung erzeugt werden, der Begriff Düse ist dabei nur als Synonym zu verstehen. Denkbar ist auch, dass unmittelbar in Nähe des Nährungssensors ein Gebläse oder Booster angeordnet ist, das/der einen entsprechenden Luftstrom erzeugt und ohne Düse auskommt. Eine Düse oder andersgeartete Strömungsführung ermöglicht jedoch eine genauere Ausrichtung des Fluidstroms.

Der Näherungssensor kann durch eine Öffnung hindurch sensieren, es ist aber auch möglich, dass, je nach Ausführung des Näherungssensors, dieser durch beispielsweise eine Wandung hindurch sensiert.

Die Erzeugung des Fluidstroms kann jeweils unmittelbar an jedem einzelnen Näherungssensor erfolgen, denkbar ist aber auch eine zentrale Erzeugung mit einer entsprechenden Zuleitung, beispielsweise über Rohre und Schläuche, zu den einzelnen Näherungssensoren. Zur Vermeidung von Frostbeeinträchtigungen kann der Fluidstrom ebenfalls unmittelbar an den Näherungssensoren erwärmt werden, denkbar ist aber auch eine zentrale Erwärmung und Zuleitung eines erwärmten Fluids.

Die Näherungssensoren erfassen, ob sich im Fahrweg des Fahrzeugsystems ein Hindernis befindet oder nicht. Wird ein Hindernis erkannt, kann, je nach Ausfühung der Steuerung, beispielsweise die Trittplatte angehalten oder auch unmittelbar zurückgefahren werden. Eine entsprechende Steuerung kann vorsehen, dass die Näherungssensoren nur dann aktiv sind, wenn das Fahrzeugtürsystem bewegt wird. Sobald das Führungssystem in seiner Endposition ist, schalten sich die Näherungssensoren ab. Alternativ können die Näherungssensoren auch aktiv bleiben und lediglich die Verwertung oder Weiterleitung der Signale unterbleiben.

Die Ausrichtung der Näherungssensoren ist den Bedingungen angepasst vorzunehmen.

Nachfolgend werden die in der Beschreibung verwendeten Begriffe der vorliegenden Erfindung unter Bezugnahme auf die beiliegenden Zeichnungen näher beschrieben. Dabei zeigen:
- Fig. 1:: eine schematische perspektivischen Ansicht einer erfindungsgemäßen Trittplatte;
- Fig. 2:: eine schematische Detailansicht der erfindungsgemäßen Trittplatte entlang des Schnittes A-A der in Figur 1 gekennzeichneten Linie A-A;
- Fig. 3:: eine schematische Detailansicht der erfindungsgemäßen Trittplatte entlang des Schnittes B-B der in Figur 1 gekennzeichneten Linie B-B; und
- Fig. 4:: eine schematische Detailansicht der erfindungsgemäßen Trittplatte entlang des Schnittes C-C der in Figur 1 gekennzeichneten Linie C-C,
- Fig. 5:: eine schematische Darstellung eines gekapselten Sensors.

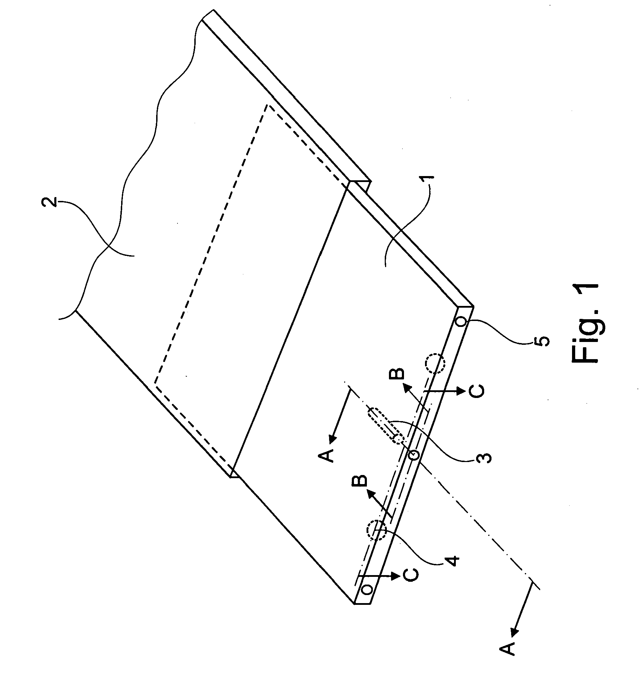

Zunächst wird auf Fig. 1 Bezug genommen, in der ein Ausführungsbeispiel einer erfindungsgemäßen Fahrzeugtürsystems, nämlich eine Trittplatte 20 dargestellt ist. Diese ist beweglich gelagert und in ein Gehäuse 22 verfahrbar. Wird die Trittplatte 20 aus dem Gehäuse 22 herausgefahren, soll über mindestens einen Näherungssensor 24, im gezeigten Beispiel über fünf Näherungssensoren 24 gewährleistet sein, dass sich vor der Trittplatte 20 kein störendes Hindernis befindet. Es ist lediglich ein Näherungssensor 24 durch gestrichelte Linien angedeutet. Um eine direkte und starke Verschmutzung, bzw. Beschädigung des Näherungssensors 24 zu vermeiden sind die Näherungssensoren 24 hinter einer Wandung 26 angeordnet. Um eine Funktion des Näherungssensors 24 dennoch zu gewährleisten, weist die Trittplatte 20 eine Öffnung 28 auf, hinter denen jeweils wenigstens ein Näherungssensor 24 angeordnet ist. Im gezeigten Ausführungsbeispiel weisen die Öffnungen 28a nach unten, die Öffnungen 28 nach vorne. Die zugehörigen Näherungssensoren 24 sind entsprechend angeordnet. Erfindungsgemäß ist mindestens eine Vorrichtung zur Leitung und/oder Erzeugung eines Fluidstroms, hier dargestellt als Düse 30, benachbart zum Näherungssensor 24 angeordnet. Die mindestens eine Düse 30 erzeugt einen Fluidstrom einer gasförmigen und/oder flüssigen Substanz.

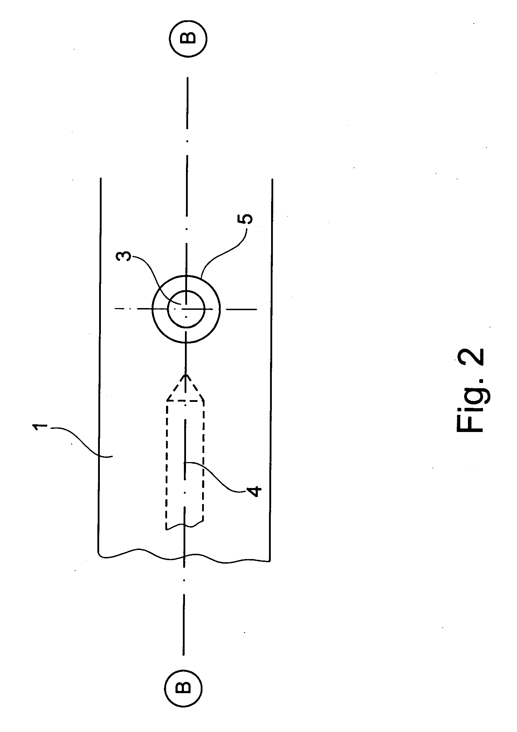

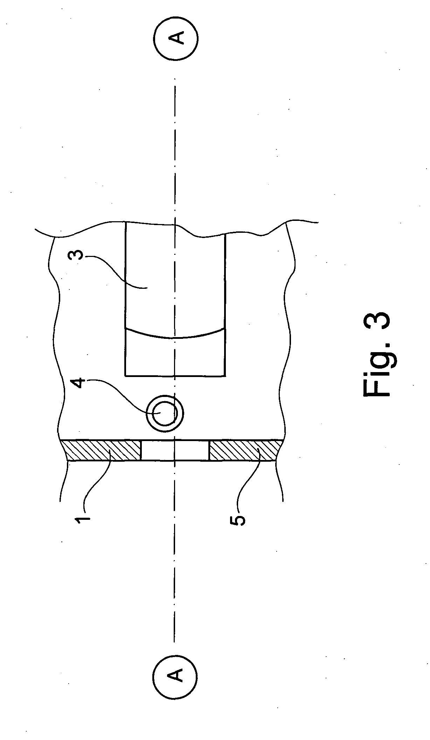

Wie die Figuren 2 und 3 verdeutlichen, ist die Düse 30 in Richtung des Sensors 24 gerichtet, wodurch gewährleistet ist, dass eventuell auftretende Störpartikel aufgrund des Fluidstroms der Düse 30 nicht durch die Öffnung 28 gelangen. Auch werden Schmutzpartikel, die z.B. von unten also nicht durch die Öffnung kommen würden, am Näherungssensor 24 vorbeigeleitet bzw. am Aufsteigen gehindert. Dabei ist, abhängig von der Empfindlichkeit des Näherungssensors 24, auch eine direkte Ausrichtung des Strahls auf die Oberfläche des Näherungssensors 24 und/oder eine direkte Ausrichtung auf die Öffnung 28 vor dem Näherungssensor 24 möglich.

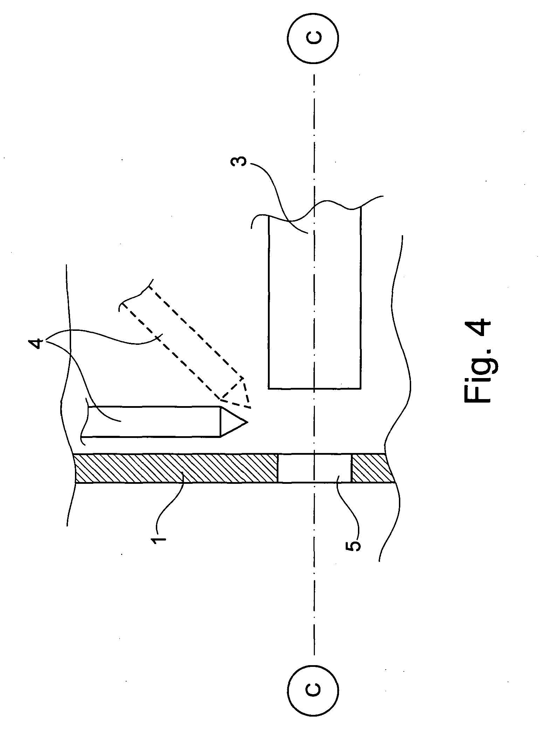

Figur 4 zeigt, dass die Ausrichtung der Düse 30 variabel möglich ist. Entsprechend ist auch denkbar, dass mehrere Düsen 30 benachbart zu einem Näherungssensor 24 angeordnet sein können, so dass beispielsweise jeweils ein Strahl auf die Öffnung 28, ein Strahl auf den Näherungssensor 24 und ein Strahl in den Zwischenraum zwischen dem Näherungssensor 24 und der Öffnung 28 gerichtet sein kann. Auf diese Weise wären ein optimales Abhalten der störenden Partikel und ein einwandfreie Betrieb des Sensors 24 möglich.

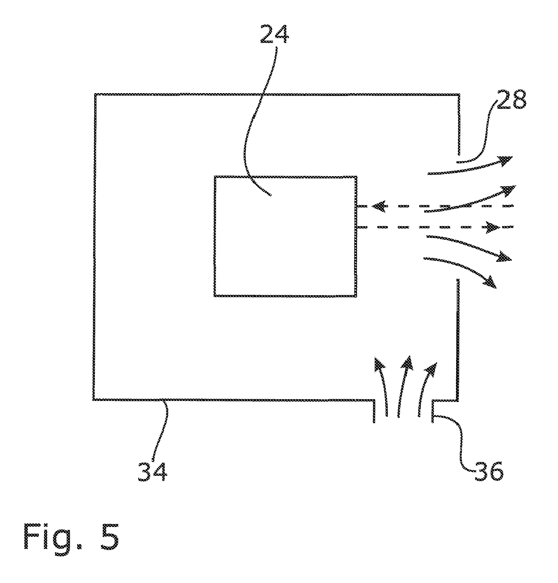

Figur 5 verdeutlicht in einer stark vereinfachten Prinzipskizze eine weitere vorteilhafte Ausführung der Erfindung. Der Näherungssensor ist als Sender und Empfänger ausgeführt, was durch die gestrichelten Linien angedeutet ist, und in einer Kammer 34 angeordnet, die allseitig geschlossen ist. Über eine Fluidleitung 36 wird Druckluft in die Kammer 34 eingeleitet, die durch eine Öffnung 28 wieder entweicht. Der Fluidstrom wird also durch das Druckgefälle von innen nach außen verursacht und verhindert, dass Schmutzpartikel durch die Öffnung 28 in die Kammer 34 eindringen können.

Die Erfindung ist nicht auf die beschriebenen Ausführungsbeispiele beschränkt. Diese dienen lediglich der Verdeutlichung der Erfindung.

## Patentansprüche

1. Sensierungsvorrichtung für Fahrzeugtürsysteme mit mindestens einem Näherungssensor (24), **dadurch gekennzeichnet, dass** eine Vorrichtung vorgesehen ist, über die ein Fluidstrom vor den Näherungssensor (24), also durch dessen Sichtbereich geleitet wird.

2. Sensierungsvorrichtung für Fahrzeugtürsysteme nach Anspruch 1, **dadurch gekennzeichnet, dass** der Fluidstrom durch einen Luftstrom gebildet ist.

3. Sensierungsvorrichtung für Fahrzeugtürsysteme nach Anspruch 1 oder 2, **dadurch gekennzeichnet, dass** im Bereich des Näherungssensors (24) eine Düse (30) angeordnet ist, die den Fluidstrom richtet.

4. Sensierungsvorrichtung für Fahrzeugtürsysteme nach Anspruch 3, **dadurch gekennzeichnet, dass** der Näherungssensor (24) hinter einer Wandung (26) angeordnet ist.

5. Sensierungsvorrichtung für Fahrzeugtürsysteme nach Anspruch 4, **dadurch gekennzeichnet, dass** im Bereich des Näherungssensors (24) eine Öffnung (28) vorgesehen ist, durch die der Näherungssensor (24) hindurch sensiert.

6. Sensierungsvorrichtung für Fahrzeugtürsysteme nach Anspruch 5, **dadurch gekennzeichnet, dass** der Fluidstrom zwischen die Öffnung (28) und den Näherungssensor (24) geleitet wird.

7. Sensierungsvorrichtung für Fahrzeugtürsysteme nach einem der Ansprüche 1 bis 6, **dadurch gekennzeichnet, dass** der Näherungssensor (24) durch einen Ultraschallsensor gebildet ist.

8. Sensierungsvorrichtung für Fahrzeugtürsysteme nach einem der Ansprüche 1 bis 7, **dadurch gekennzeichnet, dass** mehrere Näherungssensoren (24) vorgesehen sind.

9. Sensierungsvorrichtung für Fahrzeugtürsysteme nach einem der Ansprüche 1 bis 8, **dadurch gekennzeichnet, dass** eine Trittplatte (20), an der die Sensierungsvorrichtung angeordnet ist.

10. Sensierungsvorrichtung für Fahrzeugtürsysteme nach einem der Ansprüche 1 bis 9, **dadurch gekennzeichnet, dass** ein optischer Näherungssensor (24) verwendet wird.

11. Sensierungsvorrichtung für Fahrzeugtürsysteme nach einem der Ansprüche 1 bis 10, **dadurch gekennzeichnet, dass** ein akustischer Näherungssensor (24) verwendet wird.

12. Sensierungsvorrichtung für Fahrzeugtürsysteme nach einem der Ansprüche 1 bis 11, **dadurch gekennzeichnet, dass** der Näherungssensor (24) in einer ihn allseitig umgebenden Kammer (34) angeordnet ist, in der gegenüber der umgebenden Atmosphäre Überdruck herrscht und die eine Öffnung (28) aufweist, durch die der Näherungssensor (24) hindurch sensiert und durch die das Fluid entweichen kann.

13. Sensierungsvorrichtung für Fahrzeugtürsysteme nach einem der Anspruch 12, **dadurch gekennzeichnet, dass** dann die Kammer eine Fluidleitung (36) angeschlossen ist, über die Druckluft in die Kammer (34) geleitet wird.
